# EUROPEAN PATENT APPLICATION

(11) **EP 0 759 615 A2**
(43) Date of publication of application: **26.02.1997**
(21) Application number: 96306118.9
(22) Date of filing: 21.08.1996
(51) Int. Cl.: G11B 20/10

(54) **Disc type recording medium and reproduction device**

(30) Priority: 21.08.1995 JP 211673/95; 04.09.1995 JP 226460/95; 13.10.1995 JP 265447/95
(71) Applicant: NIKON CORPORATION, Tokyo 100 (JP)
(72) Inventor: Kimura, Isao, Nikon Corp., Chiyoda-ku, Tokyo (JP); Masatoshi, Hayashi, Nikon Corp., Chiyoda-ku, Tokyo (JP)
(74) Representative: Skone James, Robert Edmund

(57) **Abstract**

A reproduction device includes a disc type recording medium (22) having a first area (DT) for recording user data and a second area (TP), for recording a training pattern used in the calculation of an ideal amplitude value for determining the logic of a user pattern for the user data, reproduction of the training pattern being accomplished in advance of reproduction of the user data. A PR equalization circuit (23) is provided which equalizes the reproduction signal of the user data recorded in the first area (DT) of the disc type recording medium (22) on the basis of a partial response format. A clock generation circuit (25) produces a clock signal from the output signal of the PR equalization circuit (23). An A/D converter (24) samples the output signal of the PR equalization circuit (23) on the basis of the clock signal, and produces sample data. A decoding circuit (26, 76) decodes the sample data of the user data based on the ideal amplitude value, and produces reproduction data. An ideal value determination circuit (8) determines the ideal amplitude value from the sample data of the training pattern which is output from the A/D converter (24) in the output of a control signal, and which is applied to the decoding circuit (26,76).

## Description

The present invention relates to the disc type recording medium of a magneto optical disc and the like and a reproduction device which reproduces user data recorded in the disc type recording medium,

The disc type recording medium of the magneto optical disc and the like is capable of recording its own data in accordance with the need of the user, and is naturally capable of reproducing the recorded data, at high speeds in recent years.

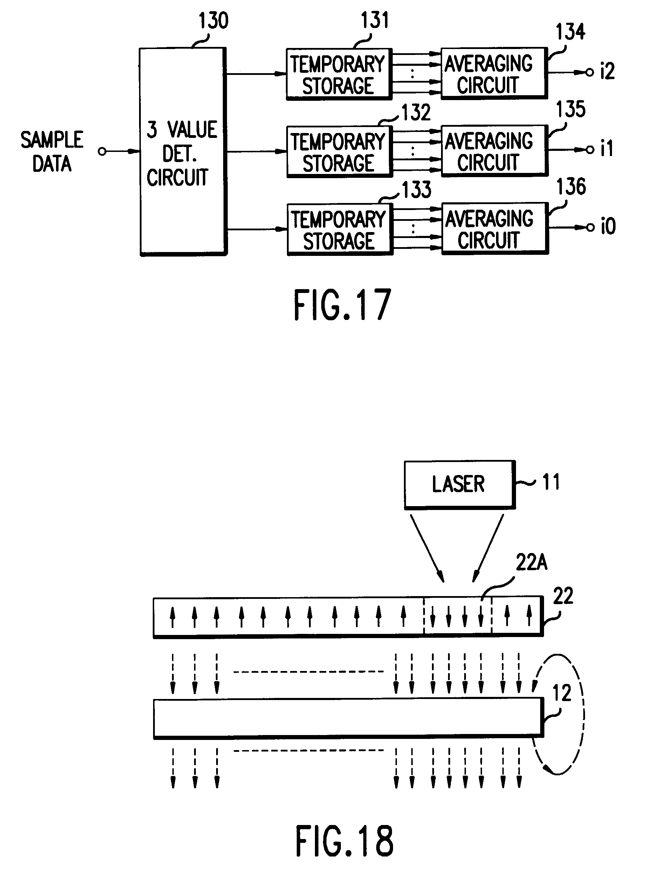

Figure 18 is a simplified representation of the recording principles of the data relative to the magneto optical disc.

The magneto optical disc 22 is ordinarily magnetized in the upward direction (in the drawing, the direction of the solid line shown by the arrow). When recording data relative to this type of magneto optical disc 22, a pulse type laser light is illuminated relative to the data from the laser 11. This being the case, the recording component which records the data of the magneto optical disc 22 is heated by means of the illumination of the laser light, and magnetized by means of the magnetic field in the direction of the arrow (i.e. the downward direction) of the dotted line, produced within the drawing, from the magnetic field generator 12. In this manner, through the magnification which is accomplished in the downward direction by the magneto optical disc 22 which is ordinarily magnetized in the upward direction, marks are recorded corresponding to the user data in the recording component 22A.

Thus, the digital user data recorded in the magneto optical disc 22 is reproduced by means of a reproduction device, not shown in the drawing, and when the data bits are recorded at a high density. When this occurs, the reproduction wave shape is such that, since an interference shape is produced between the closely proximate bits, the data cannot be accurately discriminated. Owing to this, data reproduction is accomplished by means of a reproduction format of the partial response type.

In other words, the reproduction signal of the data recorded in the magneto optical disc 22 is converted by means of a PR equalization circuit, producing a PR signal (partial response signal). Also, the PR signal is sampled, and sample data is produced by means of the clock signal produced from the PR signal.

The sample data which is produced in this manner is decoded on the basis of a ideal value by means of a decoder (in other words, by the bit by bit decoder or a "viterbi decoder" described hereafter), and output as reproduced data.

In this instance, with a system known as a PRML system which utilizes a system known as a PR system which utilizes a bit by bit decoder, and a "viterbi" decoder, the ideal value of the value of any N value (wherein N is an integer equal to or greater than 2) can be pre-established. By means of the bit by bit decoder, the threshold level can be determined from the ideal values, and decoding can be accomplished and reproduced data produced on the basis of the threshold value level. In addition, by means of the "viterbi" decoder, "viterbi" decoding can be accomplished from the ideal values, and reproduced data produced.

However, the recording conditions at the time of recording the user data relative to the magneto optical disc is not ordinarily necessarily fixed, and even if data having a fixed bit length is recorded, the length of the user data actually recorded is changed by means of changes in the peripheral temperature at the time of recording, or other factors, such as the power of the laser recording the data. In addition, the magneto optical disc in which the user data is recorded is not limited to reproduction by means of the same ordinarily used reproduction device, owing to which, when reproduction is accomplished by means of a reproduction device which has different recorded data on the magneto optical disc, aberrations will be produced in the length of the respectively reproduced data.

In this manner, the aberrations which occur at the time of recording the user data or at the time of reproducing the user data will produce slippage in the wave shape of the reproduction signal obtained from the magneto optical disc, as a result of which the reproduction signal will differ for the PR equalized generated sample data, in accordance with each condition of recording and reproduction.

Heretofore, the ideal value of the sample data necessary for the decoding processing of each bit by bit decoder of the PR system or of the "viterbi" decoder of the PRML system was established to be fixed even though the conditions for recording and playback of the previously described user data can cause slippage to occur between the ideal value and the sample data comprising the object of processing. Furthermore, with the bit by bit decoder or "viterbi" decoder, the data came to be inaccurately decoded, as a result of which the reproduced reproduction data accomplished by each decoder had the problem of an increase in bit errors.

It is an aspect of the present invention to accurately decode the sample data of the reproduced PR equalized user data for each decoder, even when the recording and the reproduction conditions relative to the magneto optical disc differ, and to suppress the increase of bit errors in the reproduction data.

The present invention is comprised such that with a disc type recording medium in which is recorded the user data in a first area, a second area is provided on which a training pattern is recorded to accomplish the calculation of the ideal amplitude value which determines the logic of the user data, reproducing it prior to the reproduction of the user data.

In addition, the second area may be establised in the leading portion of the first area, or within the first area.

In addition, when the second area is established in the head part of the first area, and when each of the bits of the user data recorded in the first area are offset to the value of one of either [0] or [1], then the second area may be established within the first area.

In addition, the present invention, including in a reproduction device composed of a PR equalization circuit which equalizes the reproduction signal of the user data recorded in the first area of the disc type recording medium on the basis of a partial response format also included in a PLL circuit which produces a clock signal from the output signal of the PR equalization circuit and an A/D converter which samples the output signal of the PR equalization circuit and produces sample data on the basis of the clock signal. A decoder circuit is provided which decodes the sample data of the user data and produces the reproduced data on the basis of the pre-established ideal amplitude value. The reproduction device maybe provided with a second area in which a training pattern is recorded to accomplish the calculation of the ideal amplitude value which determines the logic of the user data. This is produced preceding the reproduction of the user data in the disc type recording medium. A control circuit which outputs the control signal during the reproduction of the training pattern is also provided. An ideal value determination circuit determines the deal amplitude value from the sample data of the training pattern output from the A/D converter during the output of the control signal, and applies it to the decoding circuit.

In addition, the present invention includes a data reproduction device which is composed of a PR equalization circuit which equalizes the reproduction signal of the user data recorded in the first area of the magneto optical disc on the basis of a partial response format. A clock generation circuit is used to generate a clock signal from the output signal of the PR equalization circuit. An A/D converter samples the output signal of the PR equalization circuit and produces sample data on the basis of the clock signal. A bit by bit decoding circuit determines what the level is of the value of N (N comprising an integer equal to or greater than 2) by means of the pre-established ideal value, and on the basis of the determined threshold value level. This decoder converts the logic of the sample data of the A/D converter into two value data on the basis of the determined result, thereby reproducing the user data recorded in the magneto optical disc. The magneto optical disc is composed of a secondary area in which is recorded the training pattern which is reproduced in advance by means of the user data attached in the vicinity of the leading portion of the first area of the magneto optical disc. A training pattern lead circuit obtains the sample data of the training pattern sampled by the A/D converter which is equalized by the PR equalization circuit. An ideal value determination circuit calculates the ideal value from the sample data obtained by the training pattern lead circuit, and applies it to the bit by bit decoding circuit.

In addition, the present invention includes a data reproduction device that has a PR equalization circuit which equalizes the reproduction signal of the user pattern recorded in the first area of the magneto optical disc on the basis of a partial response format. A clock generation circuit generates a clock signal from the output signal from the PR equalization circuit. An A/D converter samples the output signal of the PR equalization circuit and produces sample data on the basis of the clock signal. A "viterbi" decoding circuit decodes the sample data of the A/D converter into two value data on the basis of the ideal value of the pre-established N value (N comprising an integer equal to or greater than 2). Thus, the user data recorded in the magneto optical disc is reproduced. The disc includes a second area in which the training pattern is recorded which is produced in advance from the user data established in the vicinity of the leading portion of the first area of the magneto optical disc. A training pattern lead circuit obtains the sample data of the training pattern sampled by the A/D converter which has been equalized by means of the PR equalization circuit. An ideal value determination circuit calculates the ideal value from the sample data obtained from the training pattern lead circuit and applies it to the "viterbi" decoding circuit.

In addition, the ideal value determination circuit determines the level of the N value for the logic level of the individual data of the sample data obtained by the training pattern lead circuit. The sample data after each determined logic level is grouped together and the ideal value corresponding to the logic level obtained from the sample data value included in each group is calculated. In addition, the ideal value determination circuit may also calculate the ideal value corresponding to the logic level from the average value of the sample data included in each group. Also, according to the present invention, a data reproduction device which is endowed with a PR equalization circuit equalizes the reproduction signal of the user data recorded in the first area of the disc type recording medium on the basis of a partial response format. A PLL circuit generates the clock signal from the output signal of the PR equalization circuit. An A/D converter samples the output signal of the PR equalization circuit and produces the sample data on the basis of the clock signal. A decoding circuit decodes the sample data of the user data and produces reproduction data on the basis of the pre-established ideal amplitude value. The recording medium includes a second area on which is recorded the training pattern which provide the calculation of the ideal amplitude value which determines the logic of the user data that is reproduced in advance of the user data. A detection circuit detects the accuracy of the sample data of the training pattern output from the A/D converter. This is done at the time the control signai is output, which occurs during the reproduction of the training pattern in the data reproduction device. A delay circuit which maintains the sample data during the detection of the accuracy of the sample data of the training pattern by means of the detection circuit. An ideal value determination circuit inputs the sample data maintained in the delay circuit and determines the ideal amplitude value from the input sample data on the basis of the ordinary detection output of the detection circuit, and applies it to the decoding circuit.

In addition, the ideal value determination circuit may also determine the ideal amplitude value, averaging the input sample data.

Additional aspects and advantages of the invention will be set forth, in part, in the description that follows and, in part, will be obvious from the description, or may be learned by practice of the invention. The aspects and advantages of the invention may be realized and attained by means of the instrumentalities and combinations particularly pointed out in the appended claims. It will be understood that each of the features described herein can be taken separately or jointly.

Figure 1 is a diagram which shows the construction of a disc type recording medium in accordance with an embodiment of the present invention.

Figure 2 is a block diagram which shows the construction of a PR system which processes a reproduction signal by means of the PR format.

Figure 3 is a diagram which shows the operational wave shape of each component of the PR system of Figure 2.

Figure 4 is a diagram which shows the construction of a precoder which accomplishes a NRZI conversion utilized in the PR system of Figure 2.

Figure 5 is a diagram which shows the construction of a PR equalization circuit utilized in the PR system of Figure 2.

Figure 6 is a diagram which shows the construction of a bit by bit decoder utilized in the PR system of Figure 2.

Figure 7 is a block diagram which shows the construction of a PRML system.

Figure 8 is a diagram which shows the operational wave shape of each component of the PRML system of Figure 2.

Figure 9 is a diagram which shows the construction of the "viterbi" decoder utilized in the PRML system of Figure 7.

Figure 10 is a diagram which shows the recording state of a magneto optical disc data in accordance with an embodiment of the present invention.

Figure 11 is a diagram which shows the format of the training pattern recorded in a magneto optical disc in accordance with an embodiment of the present invention.

Figure 12 is a block diagram which shows the components of a reproduction device in accordance with an embodiment of the present invention.

Figure 13 is a block diagram which shows the construction of a reproduction device in accordance with the first embodiment of the present invention.

Figure 14 is a block diagram which shows the construction of a reproduction device in accordance with the third embodiment of the present invention.

Figure 15 is a block diagram which shows the construction of a reproduction device in accordance with the second embodiment of the present invention.

Figure 16 is a block diagram which shows the construction of a reproduction device in accordance with the fourth embodiment of the present invention.

Figure 17 is a diagram which shows the construction of an ideal value determination circuit in accordance with an embodiment of the present invention.

Figure 18 is a diagram which shows the simplified recording principles of the data relative to the magneto optical disc.

Generally speaking, with a data reproduction device which reproduces digital data comprising user data recorded on a magneto optical disc device, reproduction of data is accomplished by means of a partial response (hereafter referred to as PR) format, in a reproduction system.

In a PR system, each type of format is present, however, in this instance, an explanation is provided with respect to the reproduction principles relating to an example of a PR (1,1) system used in conjunction with a magneto optical disc device.

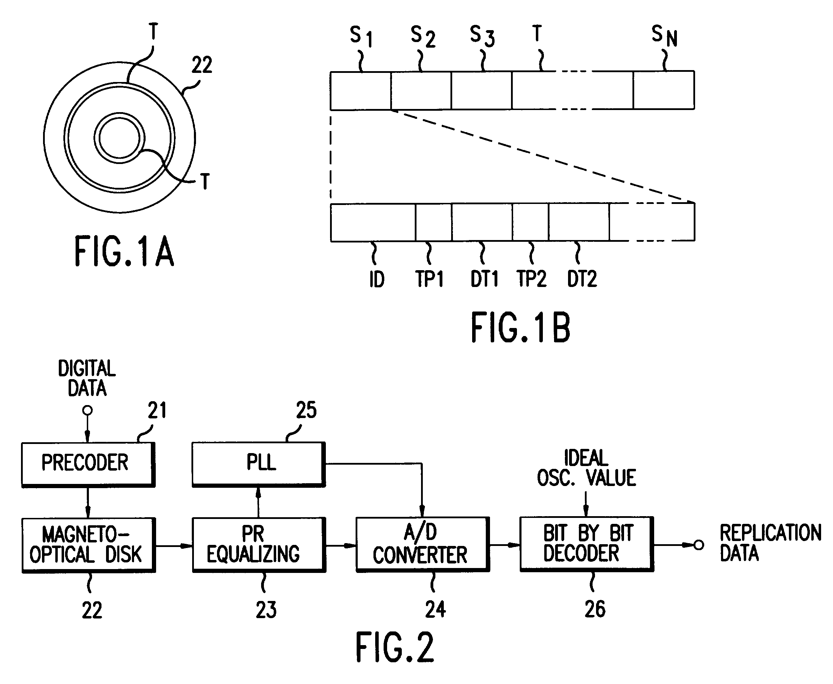

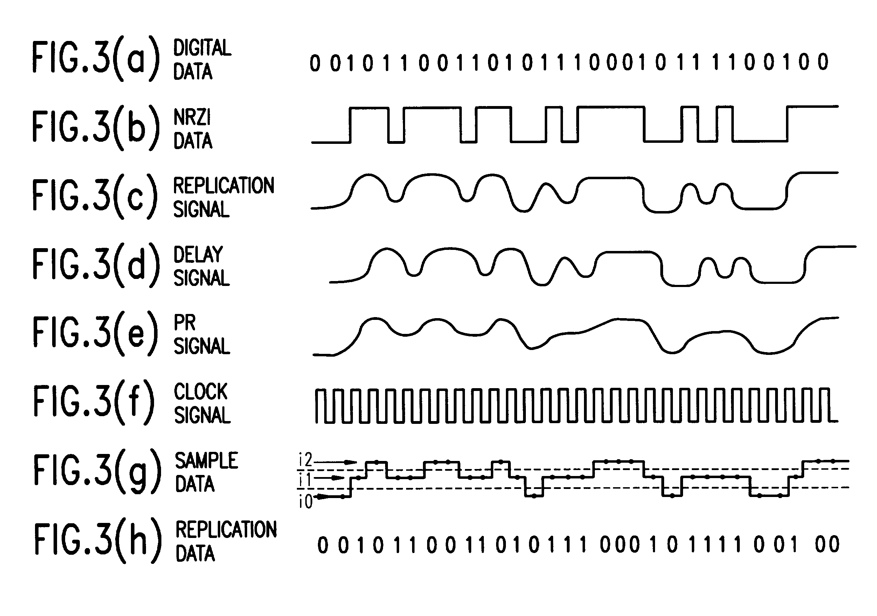

Figure 2 is a system (hereafter referred to a PR system) which accomplishes recording and reproduction of data based on the PR (1,1) format. In addition, Figure 3 is a wave shape diagram which shows the operational wave shape of each component of the PR system.

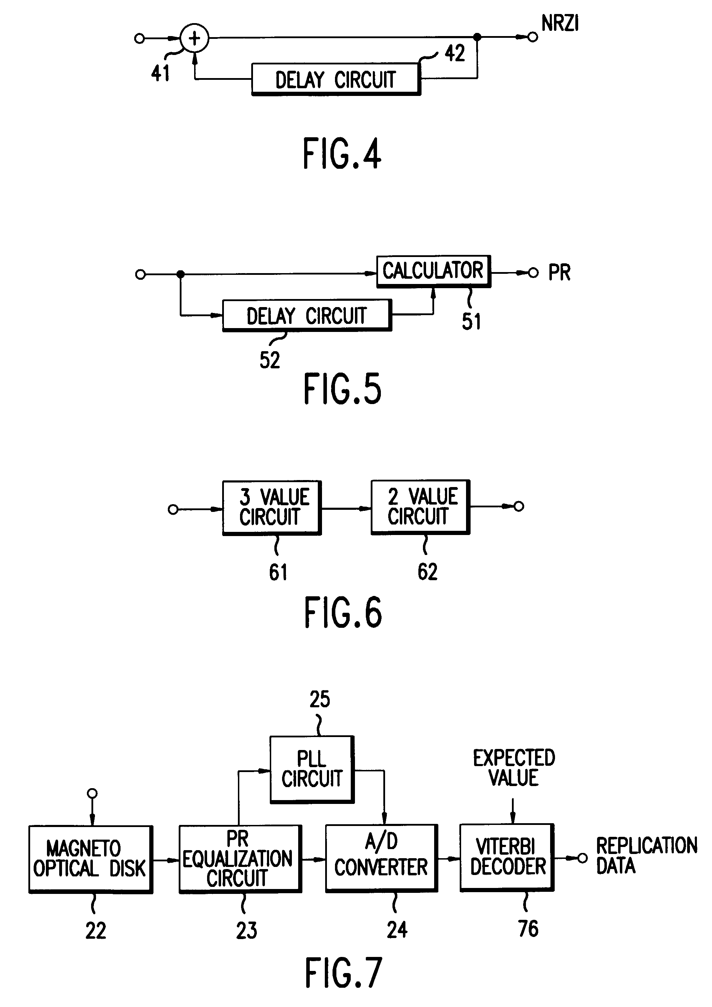

If the precoder 21 shown in Figure 2 inputs digital data shown in Figure 3(a) which is output from an external circuit (not shown). Precoder 21 converts this data into the pattern data shown in Figure 3(b). This is done by means of a delay circuit 42 which delays the output of the calculator 41 and the one bit division of data which accomplishes the (modulo 2 addition) shown in Figure 4. In other words, calculator 41 accomplishes the (modulo 2 addition) of the one bit division delayed data for the input digital data, and the output of the calculator 41, and outputs it and records it to the magneto optical disc 22 as NRZI data.

With the NRZI conversion accomplished by means of precoder 21, it is necessary for it to have the capability of preventing the transmission of processing errors by means of bit by bit decoder, described hereafter, executed at the time of reproduction.

In this manner, the data recorded in magneto optical disc 22 is reproduced as a reproduction signal such as is shown in Figure 3 (c) and output to PR equalization circuit 23. PR equalization circuit 23 converts these reproduction signals into the PR signals shown in Figure 3(e). This is realized through conversion by means of the PR equalization circuit 23, i.e., PR equalization is realized by means of a calculator 51 and a delay circuit 52 as illustrated in Figure 5.

In other words, the reproduction signal shown in Figure 3(c) from magneto optical disc 22 is applied to calculator 51, as the delay signal shown in Figure 3(d) which only delays the one T (wherein T represents the time of one bit division, by means of delay circuit 52, applied to calculator 51. By means of calculator 51, the PR signal shown in Figure 3(e) is produced, calculating both signals, and is applied to A/D converter 24 and the PLL circuit 25.

In this instance, by means of the PLL circuit 25, the clock signal of the figure 3(f) which is synchronized to the input signal from the input PR signal is generated, and applied to A/D converter 24. By means of the A/D converter 24, the PR signal is sampled by means of the clock signal, and the three value pattern data comprising i2, i1, and i0 shown in Figure 3(g) are generated, and applied to bit by bit decoder 26 as sample data.

In this instance, by means of noise originating in the condition of the medium (magneto optical disc), or in the reproduction circuit which reproduces the data from the recording state of the medium and from the medium itself, and fluctuations are produced in the PR signal of the Figure 3(e), the distribution of the amplitude of the actual sample data is distributed as three peaks, centering on the 3 values of i2, i1, and i0. In this instance, the center values i2, i1, and i0 are referred to as ideal amplitude values.

Using bit by bit decoder 26, these signals are converted into the reproduction data shown in Figure 3(h) from the input sample data, and output.

Figure 6 is a block diagram which shows the components of bit by bit decoder 26, and includes a three valued circuit 61, and a 2 valued circuit 62. With the three valued circuit 61, when the ideal amplitude values input from an external device not shown in the drawing are i2, i1, and i0, then the threshold values are respectively established between i2 and i1, and between i1 and i0. Using the threshold values as a standard, a determination is made as to what the logic is of the sample data.

In this instance, when, using three valued circuit 61, the threshold level is established from the input ideal amplitude value. The threshold value is considered to be the interim value between i2 and i1, and the interim value between i1 and i0.

In two valued circuit 62, which receives as input the output of three valued circuit 61, if the three valued circuit 61 makes a logic termination with respect to the maximum value and the minimum value, then if, as the reproduction data [0] is interim value and logic determined, then [1] is respectably output as the reproduction data. As a result, to the extent that no change is received wherein the data of some sample point from the signal fluctuation described earlier does not exceed some threshold value, and with the PR system shown in Figure 2, the digital data of the figure 3(a) recorded on magneto optical disc 22, and the reproduction data of the figure 3(h) become the same data.

Therefore, when by means of noise originating in the condition of the medium, or in the recording condition of the medium, or in the reproduction circuit, a large amount of signal fluctuation is produced in the PR signal of Figure 3(e), and where changes are received wherein some selective sample point data exceeds the threshold value, then with the PR system shown in Figure 2, this is directly connected to bit errors of reproduction data. Therefore, with the objective of reducing the generation of such bit errors, in place of bit by bit decoder 26, a PRML system is known in which utilization is made of a viterbi decoder 76 shown in Figure 7.

In other words, with the PRML system shown in Figure 7, as with the PR system shown in Figure 2, in addition to the utilization of magneto optical disc 22, PR equalization circuit 23, A/D converter 24, and PLL circuit 25, precoder 21 which accomplishes the NRZI conversion which was essential with the PR system shown in Figure 2 is not necessary with the PRML system of Figure 7 which utilizes a viterbi decoder 76.

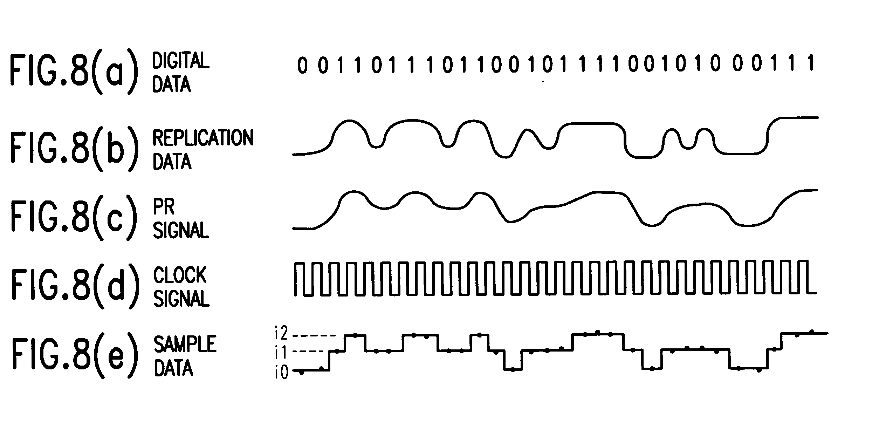

Figure 8 is a diagram which shows the changing shapes of each of the components of the PRML system. In other words, when the digital data which is already NRZI converted as shown in Figure 8(a) is recorded on magneto optical disc 22, the signal which is reproduced from the magneto optical disc 22 becomes the signal shown in Figure 8(b), and is output to PR equalization circuit 23. In PR equalization circuit 23, conversion is accomplished in the same manner as with the PR system of Figure 2, and as shown in Figure 8(c), it is applied as a PR signal to A/D converter 24, and PLL circuit 25.

By means of PLL circuit 25, the clock signal shown in Figure 8(d) is generated in synchronization with the signal input from the input PR signal, and is applied to A/D converter 24. By means of A/D converter 24, the PR signal is sampled by means of the clock signal, and, is applied to viterbi decoder 76 as the sample data such as shown in Figure 8(e).

Here, by means of the noise which originates in the state of the medium, in the recording state of the medium, the reproduction circuit, since signal fluctuation is produced in the PR signal of Figure 8(c), the distribution of the (amplitude) at the time of the sample data shown in Figure 8(e) is distributed in the form of three peaks centered on the three ideal amplitude values i2, i1, and i0, in the same manner as with the PR system of Figure 2. By means of viterbi decoder 76, reproduction is accomplished of the digital data in the same manner as was accomplished with the data of Figure 8(a), from such sample data.

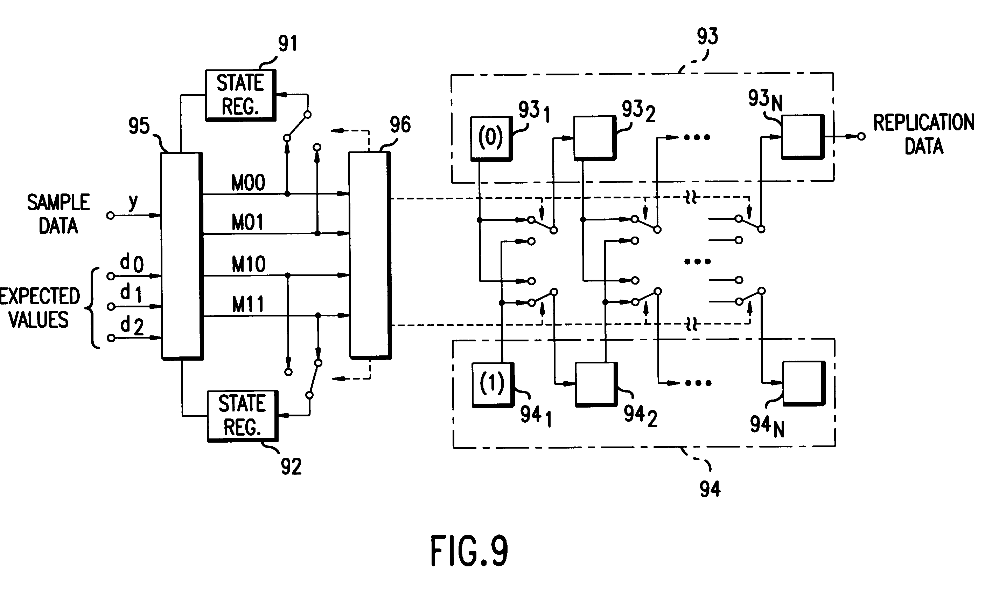

Figure 9 is a block diagram which shows components of viterbi decoder 76, which is composed of two state registers 91 and 92; data series registers 93 and 94 of two N bits (wherein N is a natural number); a state calculation circuit 95; and a determination circuit 96. In this instance, a [0] is established in the renewed lower bit position of data series register 93, and [1] is established in the renewed lower position of data series register 94. Also, with each application of the sample data (wherein the sample data is y), from A/D converter 24, viterbi decoder 76 accomplishes processing in the manner indicated hereafter.

In other words, first of all, by means of state calculation circuit 95, calculation is accomplished of the four values comprising M00, M01, M10, and M11, by means of the formats (1) - (4) shown hereafter, on the basis of the anticipated values d0, d1, d2 of the sample data obtained from two state register 91 and 92 values M0, and M1; the sample data y output from A/D converter 24, and from the external device (not shown in the diagrams) (in this instance, d2 corresponds to the maximum value, d1 corresponds to the interim value, and d0 corresponds to the minimum value, and when the sample data ideal amplitude value is respectively i2, i1, and i0, then it becomes d2=i2, d1=i1, and d0=i0).
(1) M00=M0-2.y.d0+d0²
(2) M01=M01-2.y.d1+d1²
(3) M10=M0-2.y.d1+d1²
(4) M11=M1-2.y.d2+d2²

Next determination circuit 96 first of all compares the size of the value of M00 with the value M01. Also, if M00 < M01, then M00 is stored in state register 91, and the value of (N-1)-0 bits of series register 93 will shift by one bit in the upper position direction.

In addition, it the case where M00 ≥ M01, then M01 is stored in state register 91, at the same time as which the value of (N-1)-0 of data register 94 is respectively copied into the N-1 bits of data series register 93.

Continuing, determination circuit 96 compares the size of the value M10 and the value M11.

Also, when M10 is greater than M11, then M11 is stored in state register 92, and the value of (N-1)-0 bits of data series register 94 is shifted by one bit in the upper position direction. In addition, when M10 ≤ M11, then the M10 is stored in the state register 92, at the same time as which the value of (N-1)-0 bits of data series register 93 is respectively copied to the N-1 bits of data series register 94.

Subsequently, determination circuit 96 outputs the uppermost position bit of data series register 93 to an external component as the reproduced data.

In this manner, viterbi decoder 76, when the sample data has been input, does not make a hard determination in determining the [0] or the [1] by means of some threshold level relating to the data such as with the bit by bit decoder 26, but rather makes a soft determination in determining what appears to be a correct data series while looking at the state of the previous and subsequent data.

Furthermore, two series registers 93 and 94 are tied up in the question of whether or not there is a [0] or a [1] following each accomplishment of a shift operation. At the point in time in which the uppermost bit position is reached, an output of the reproduced data is provided, and the data is confirmed as being either [0] or [1].

In this instance, when the bit number of the N of the data series register is small, there is some concern that a confirmation will not be made as to whether or not it is [0] or [1], and when the N bit number is great, then the probability of nonconfirmation is small, and the occurrence of bit errors in the reproduction data also becomes small. By this means, if the bit number N of two series registers 93 and 94 are large, since the data is confirmed, output can be accomplished of the uppermost position bit of either of the registers as reproduction data. However, in this example, the uppermost position bit of series register 93 is output as reproduction data.

Furthermore, with viterbi decoder 76, calculation is accomplished of the probability of the occurrence of each data series by state calculation circuit 95, and within the two data series which comprise the processing results of state calculation circuit 95 by means of the determination circuit 96, and a determination is made of survival data series which would make the part having a high probability of occurrence to become the surviving data series. However, data series registers 93 and 94 have responsibility for preserving the surviving two data series, and state registers 91 and 92 are responsible for preserving the probability of the occurrence of the surviving data series.

In this manner, an explanation has been provided with regard to the PR system and PRML system and their operation. However, with either system, since reproduction data is generated from the sample data of the PR signal, a three value ideal amplitude value is necessary in order to decode the three value sample data. By means of bit by bit decoder 26 of the PR system, the threshold value is established from these ideal values, and the sample data is made into two values from the threshold value. In addition with viterbi decoder 76 of the PRML system, these ideal amplitude values are utilized as anticipated values, and accomplish the decoding of the sample data.

Therefore, when digital data is recorded relative to magneto optical disc 22, then it is ordinarily not limited to being fixed, but even if a mark of specified length corresponding to the digital data is to be recorded, then in accordance with changes in the peripheral temperature at the time of recording, or changes in the power of the laser which records the data, the length of the mark which is actually recorded on the magneto optical disc changes. In addition, since ordinarily the magneto optical disc is not restricted to reproduction by means of a simultaneous reproduction device, when the mark which is recorded on magneto optical disc 22 is reproduced by means of respectively differing reproduction devices, the length of the reproduced mark will produce aberrations following each reproduction device.

Furthermore, with bit by bit decoder 26 described above, and with viterbi decoder 76, if the ideal amplitude value necessary to each decoding process is entirely fixed, then the fixed ideal amplitude value will not conform to the amplitude distribution of the sample data of the user data for which reproduction is desired, owing to which the problem will occur that bit errors will occur often in the reproduced data which is decoded on the basis of the ideal amplitude value.

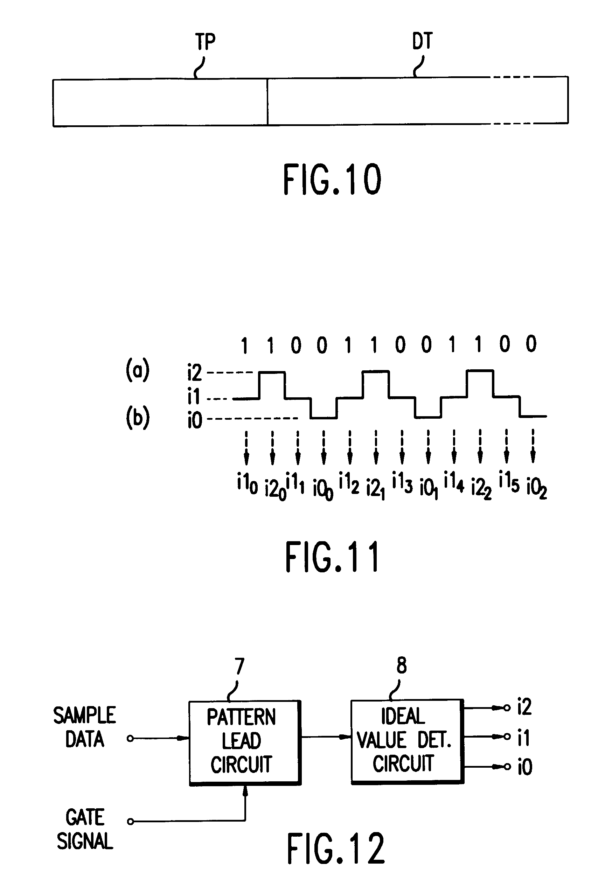

Because of this, as shown in Figure 10, in the training pattern area TP which is proximate to the head part of the user data area DT in which the user data is recorded on magneto optical disc 22, is recorded the training pattern used to calculate the ideal amplitude value. Also, through the establishment of the training pattern in the pattern shown in Figure 11(a), as the sample pattern following the PR equalization sampling, a pattern is obtained which includes all three levels such as shown in Figure 11(b).

The sample data of the training pattern which has been thus handled is such that during the period in which the pattern is reproduced, it is obtained by pattern lead circuit 7 shown in Figure 12, on the basis of the gate signal from the external control circuit (not shown in the diagram), and is transmitted to ideal value determination circuit 8.

Also, by means of ideal value determination circuit 8 shown in Figure 12, the ideal amplitude values i2, i1, and i0 are determined corresponding to the three value levels comprising the maximum, interim, and minimum levels obtained from the sample data of the resultant training pattern.

As the first establishment method of the ideal amplitude value, the sample data obtained by the pattern lead circuit 7 is chronologically sorted into three logic levels by the two threshold value levels from the leading portion of the recording area by ideal value determination circuit 8, wherein the initial sampling data belonging to the respective groups can be considered to be made into the ideal amplitude value of the respective logic levels. If utilization is made of this method, then the i2₀, i1₀, and i0₀ within the data shown in Figure 11(b) is selected as the ideal amplitude values i2, i1, and i0. Hence, if utilization is made of this method, then the circuits can be made of simplified construction.

In addition, as the second determination, the obtained sample data is sorted into the three logic levels by means of the two threshold value levels, chronologically from the head by means of ideal values determination circuit 8, in the same manner, subsequent to which the average of the sample data of the M units (wherein M is an integer equal to or greater than 2) belonging to each group is obtained, in a method whereby it is output as the ideal amplitude values i2, i1, and i0. If utilization is made of this method, then slippage of the ideal amplitude values, as caused by aberrations in the sample data originating in the read out noise, can be prevented.

Furthermore, the threshold value levels which utilize the sorting of the logic levels accomplished by means of the described first and second methods may also use ordinarily fixed values, and calculation may also be accomplished by means of the ideal amplitude values i2, i1, and i0 obtained at the time of the immediately previous data lead

In this manner, the ideal amplitude values i2, i1, and i0 determined by ideal value determination circuit 8 are applied to bit by bit decoder 26 and viterbi decoder 76, following which they continue to be utilized in the user data. In this instance, by means of bit by bit decoder 26, from the ideal amplitude value which has been thus applied, the threshold value level described above is determined. Also, continuing thereafter, the sample data of the user data area DT which has been reproduced is decoded and output as reproduced data on the basis of the threshold values. In addition, with the viterbi decoder 76, utilization is made of the ideal amplitude values as the anticipated values described above, and in the same manner continuing thereafter, the sample data of the user data area DT is decoded on the basis of the anticipated values. As a result, the sample data of the user data can accurately be decoded.

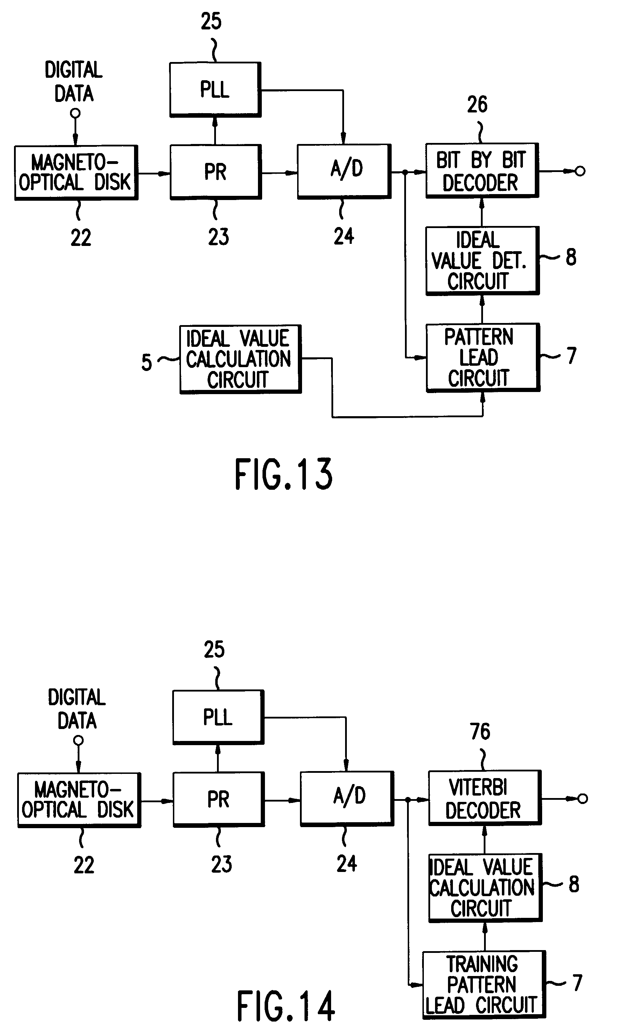

Figure 13 is a block diagram which shows the construction of a reproduction device in accordance with the first embodiment of the present invention.

This reproduction device is constructed such that to the PR system of Figure 2 is attached the ideal value calculation control circuit 5, pattern lead circuit 7 shown in Figure 12, and ideal value determination circuit 8.

Ideal value calculation control circuit 5 is such that the data of the TP training pattern area obtained from magneto optical disc 22 is put into the enable state for the gate signals relative to pattern lead circuit 7, by means of reproduction timing.

In other words, during the period in which the gate signal is enabled, the data of the training pattern area TP of magneto optical disc 22 is reproduced, and following the equalization of the reproduction signal by means of PR equalization circuits 23, it is created as sample data by means of A/D converter 24. Pattern lead circuit 7 obtains the sample data of the training pattern produced during the period in which the gate signal becomes enabled, and sends it to ideal value determination circuit 8. By means of ideal value determination circuit 8, the ideal amplitude values i2, i1, and i0 are determined from the sample data. Furthermore, the ideal value determination method accomplished by means of ideal value determination circuit 8 is the method which was described in Figure 11(b), however, other than this, there is a method which takes the average value following each three value level of sample data, utilizing the averaging circuit.

In this manner, when the data of magneto optical disc 22 is read in, and during the period in which the training pattern area TP is being reproduced, the ideal amplitude value is determined utilizing ideal value calculation control circuit 5, pattern lead circuit 7, and ideal value determination circuit 8. The determined ideal amplitude values i2, i1, and i0 are sent to the bit by bit decoder 26, and are utilized in the decoding of the sample data of the user area which is reproduced immediately following the training pattern area.

In other words, by means of bit by bit decoder 26, the threshold value is established on the basis of the determined ideal amplitude value, at the same time as which the sample data of the user data area which was immediately input thereafter is decoded by the threshold value level, and produced as reproduced data.

Furthermore, an example of the PR system has been explained in which utilization was made of bit by bit decoder 26, for the decoded data in the example shown in Figure 13, however, it is clear that appropriate application can also be made in the same manner relative to the PRML system in which utilization is made of viterbi decoder 76.

Figure 14 is a block diagram of a reproduction device according to the second embodiment of the present invention, and is constructed through the utilization of viterbi decoder 76.

In other words, when the data within magneto optical disc 22 is read in, then in the same manner, utilizing ideal value calculator control circuit 5 (abbreviated in Figure 14), the pattern lead circuit 7, and ideal value determination circuit 8, then the ideal amplitude value is determined by the training pattern area. Also, the determined ideal amplitude values i2, i1, and i0 are sent to viterbi decoder 76. With viterbi decoder 76, the determined ideal amplitude value is utilized as an anticipated value, and the sample data of the user data area which was input immediately thereafter accomplishes decoding on the basis of the anticipated value, and produces it as reproduced data.

In this manner, by means of bit by bit decoder 26, or viterbi decoder 76, in order to decode the sample data by means of the ideal values corresponding to the sample data of the subject of processing, through the complete slippage of the ideal value relative to the actual sample data, it is possible to prevent an increase in bit errors of reproduced data which originate in error decoding.

Therefore, generally speaking the magneto optical disc is provided with recording and reproduction characteristics, which pass to the direct flow components of the signals. However, if the signals including the direct flow components are to be reproduced by the reproduction device, then the amplification circuit (not shown) in the reproduction device must necessarily be provided with a broad frequency band. However, when utilization is made of the broad band frequency circuit thus described, a deterioration of the general signal quality is produced, due to which the band area of the amplification circuit is restricted, and the direct flow components are removed, so as to reproduce the signal.

In this instance, when the user data recorded on magneto optical disc 22 includes direct flow components, and when the direct flow components move, then in addition to changing the direct flow components, the envelope of the reproduced signal of the user data which is reproduced from magneto optical disc 22 is changed. As a result, the amplitude distribution of the sample data of the user data obtained from the reproduction signal also changes in accompaniment with changes in the direct flow component.

Furthermore, when it is intended to decode the sample data of the user data area DT in the determined ideal amplitude value on the basis of the pattern of the training pattern area, then the ideal amplitude value obtained from the training pattern of the head is such that there are times when the amplitude distribution of the user data of the subsequent half area of the user data area DT is removed, as a result of which there is some concern that the data of the following half area of the user data area DT will not be accurately decoded.

Due to this, the construction of the data area of the magneto optical disc 22 is such that the respective training pattern within the leading portion of the user data area DT and the user data area DT are attached.

Figure 1 is a diagram of a first embodiment of the present invention which shows the construction of this type of magneto optical disc 22. In Figure 1(a), the track T shows the tracks respectively recorded for the user data and the training pattern. In addition, track T, as shown in Figure 1(b) is composed of the multiple sectors S1-SN. Each sector has an attached area ID in which the discrimination code is recorded in the head part, and continuing, the training pattern area as well as the user area are mutually attached in the reproduction chronology of its data.

Furthermore, each data pattern of the training areas TP1, TP2, ... are both the same patterns, comprising the patterns shown in Figure 11. In addition, in totalling each data within the user areas DT1, DT2, ... , it becomes the same as the data within the user data area DT shown in Figure 10. In other words, with the present embodiment, when the user data on magneto optical disc 22 is recorded, then along with the user data, discrete recording is accomplished of the training pattern in each location within the user data.

An explanation is again provided with resect to the operation of the reproduction device which reproduces the data from the track T of the magneto optical disc 22 constructed in the manner described above, and with reference to Figure 13.

Ideal value calculation control circuit 5 is placed in the enable state for the gate signal relative to pattern lead circuit 7, with reproduction timing for the data of the training pattern area TP from magneto optical disc 22.

In other words, during the period in which the gate signal becomes enabled, the data of the training pattern area TP of magneto optical disc 22 is reproduced, and following the accomplishment of equalization by means of the PR equalization circuit, the reproduction signal is produced as sample data by means of A/D converter 24. Patterned lead circuit 7 obtains the sample data of the training pattern produced in the period in which the gate signal becomes enabled, and sends it to ideal value determination circuit 8. By means of ideal value determination circuit 8, the ideal amplitude values i2, i1, and i0 obtained from the sample data are determined. Furthermore, the ideal value determination method used with ideal value determination circuit 8 is a method which was explained with reference to Figure 11(b), described earlier. However, there are also methods other than this in which an average is taken following each sample data three value level, utilizing the averaging circuit.

In this manner, when the data of the selective sector S within the track T of magneto optical disc 22 is read in, then, utilizing ideal value calculator control circuit 5, pattern lead circuit 7, and ideal value determination circuit 8, the ideal amplitude value is determined by means of all of the training pattern areas within the sector S. The determined ideal amplitude values i2, i1, i0 are sent to bit by bit decoder 26, and are utilized in decoding in the sample data of the user data area reproduced immediately after the respective training pattern areas.

In other words, by means of the bit by bit decoder 26, the threshold value level is established on the basis of the determined ideal amplitude value, at the same time as which the sample data of the user area which is immediately input thereafter is decoded by means of the threshold value level, and produced as reproduced data.

Furthermore, in the example shown in Figure 13, an explanation was provided of the PR system which utilizes the bit by bit decoder 26 as the decoder. However, it is clear that an appropriate application can be accomplished in the same manner relative to the PRML system in which utilization is made of viterbi decoder 76.

Again, in providing an explanation with reference to Figure 14, when the data of a sector S within magneto optical disc 22 is read in, then in the same manner, utilizing ideal value calculation control circuit 5, pattern lead circuit 7, and ideal value determination circuit 8, then the ideal amplitude value is determined by all of the training pattern areas within the sector S. Also, the determined ideal amplitude values i2, i1, and i0 are sent to viterbi decoder 76. By means of viterbi decoder 76, the determined ideal amplitude value is utilized as an anticipated value. The sample data of the user data area which is input immediately thereafter accomplishes decoding on the basis of the anticipated value, and produces it as reproduced data.

In this manner, recording is accomplished not only of the leading portion of the user area of magneto optical disc 22, but also of the training pattern within the user data area. Preceding the reproduction of the user data area the training pattern is reproduced. The ideal amplitude value is determined from the reproduced pattern, at the same time at which decoding is accomplished. Also of the user data which is input immediately thereafter is reproduced on the basis of the most recently determined ideal amplitude value.

As a result, there is a change in the direct flow components of the user data at the time of reproduction of the user data recorded on magneto optical disc 22. When signal reproduction is accomplished removing the direct flow components by means of the reproduction device, the ideal amplitude value can be renewed, corresponding to changes in the direct flow components of the user data. Furthermore, by means of bit by bit decoder 26, or viterbi decoder 76, the user data can be decoded by means of the ideal amplitude value which conforms with the amplitude distribution of the user data, and ordinarily the occurrence of bit errors in the reproduced data can be prevented.

Furthermore, at the time of recording the digital user data in each sector S of magneto optical disc 22, a comparison is made of the number of digital data bit values [1] and the number of bit values [0]. When the bit value [0] number is significantly grater than the bit value [1] number, and only when the number of bit values [0] is significantly smaller in comparison with the number of bit values [1], may the training pattern be discretely recorded in the user data area. In other words, if there is an imbalance produced such as that described above between the number of recorded digital data bit values [1] and the number of bit values [0], then the reproduction signal is such that the direct flow components become great. If the direct flow components change, then bit errors occur extensively in the data reproduced by each of the decoders. Only in such an instance can bit errors be suppressed as necessary where the training patterns are discretely recorded.

Next, Figure 17 shows a sample construction of an ideal value determination circuit 8 according to the embodiment of the present invention. In the same diagram, ideal value determination circuit 8 is composed from a three value determination circuit 130, temporary storage buffers 131-133, and averaging circuits 134-136, thereby obtaining the ideal values i2, i1, and i0 in accordance with the following chronology.

In other words, the sample data obtained by training pattern lead circuit 7 is initially chronologically sorted into the three logic levels by means of the two threshold value levels from the leading portion of the data area by means of three value determination circuit 130. A portion of the sorted data or all of it is respectively stored in corresponding temporary storage buffers 131-133. By means of averaging circuits 134-136, data which is stored in the correspondingly connected temporary storage buffers 131-133 is respectively taken out and averaged, and is output to bit by bit decoder 26 as ideal values i2, i1, and i0.

Ideal value determination circuit 8 shown in Figure 17 can be appropriately applied to the reproduction device of each embodiment.

In this manner, by means of ideal value determination circuit 8, the ideal values i2, i1, and i0 can be obtained by respectively averaging the training pattern sample data corresponding to each logic level. Furthermore, even when a portion of the training pattern deviates from the ideal value under the influence of noise and the like of the reproduction signal, by means of averaging, the deviation can be either absorbed, or reduced.

Next, an explanation is provided relative to the reproduction device according to a third embodiment of the present invention.

As explained above, the ideal amplitude values i2, i1, and i0 determined by ideal value determination circuit 8 are applied to bit by bit decoder 26 and viterbi decoder 76, and continuing thereafter are utilized in the decoding of the user data. In this instance, by means of bit by bit decoder 26, the threshold value level can be determined in the manner described above from the applied ideal amplitude value. Also, continuing thereafter, the sample data of the reproduced user data area DT is decoded, and output as reproduced data on the basis of the threshold values. In addition, by means of viterbi decoder 76, utilization is made of the ideal amplitude values as the anticipated value explained above, and in the same manner continuing thereafter, the sample data of the user data area DT is decoded on the basis of the anticipated value. As a result, the sample data of the user data can be accurately decoded.

However, if there is a medium defect in a part of the training pattern area TP, then the amplitude distribution of the sample data which reproduces the training pattern of this part is removed from the distribution of the three peaks, which center on the i2, i1, and i0. Because of this, with the first determination method described above in which determination is accomplished of the ideal amplitude value, when such medium defects are produced in the head portion of the area TP, then the subsequently continuing user data cannot be accurately decoded.

In addition, with the second determination method, since by means of the medium defects a portion of the sample data which has been averaged in the amount of M units, or all of them, will have errors, owing to which since erroneous ideal amplitude values will be obtained. Then, in the same manner continuing thereafter, the user data cannot be accurately decoded.

Because of this, by making a prior and subsequent comparison of the values for the amplitude values of the individual sample data of the training pattern, only during the period in which there is conformity when detection is accomplished as to whether or not the comparison results conform with the characteristics of the training pattern which has been pre-established for example, as shown in Figure 11(b), with construction being such that the ideal amplitude values obtained by the sample data of the training pattern is determined.

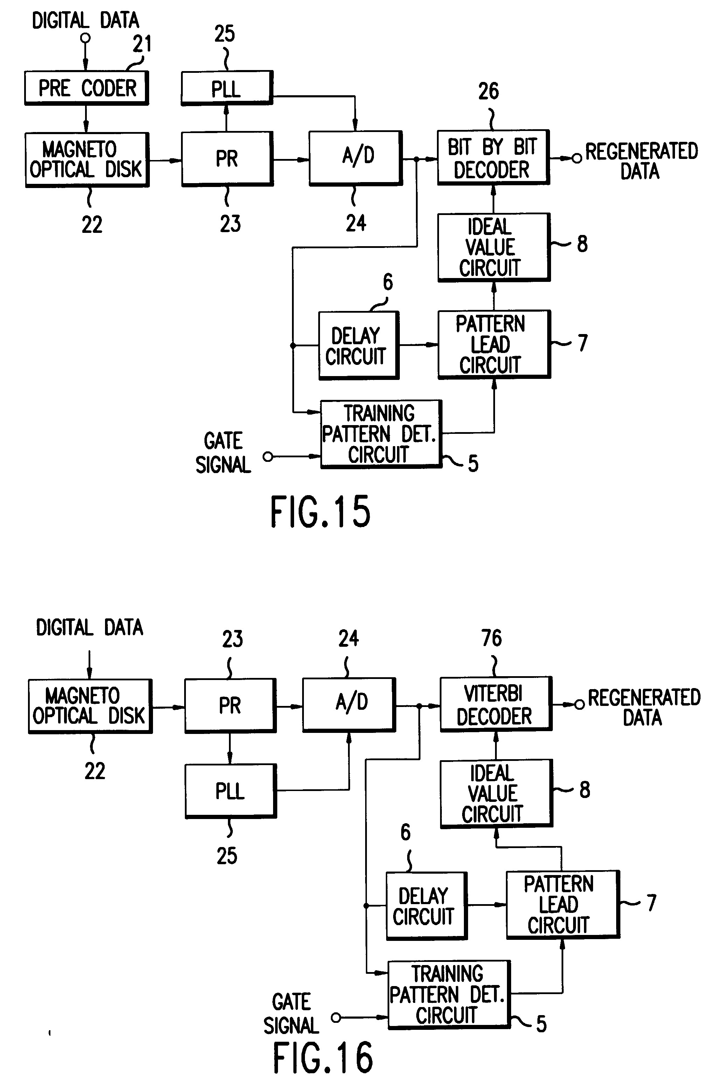

Figure 15 is a block diagram which shows a reproduction device of the third embodiment of the present invention wherein decoding of the user data is accomplished on the basis of such determination of the ideal amplitude value and the determined ideal amplitude value.

With this reproduction device, a pattern lead circuit 7 shown in Figure 12, relative to the PR system of Figure 2, and an ideal value determination circuit 8 is affixed. Furthermore, a delay circuit 6 is attached to the previous means of the pattern lead circuit 7, and when inputting the sample data of the training pattern area TP and detecting whether or not it is ordinary on the basis of the gate signal from the external control circuit not shown in the drawing, only then is a training pattern detection circuit 5 attached which operates the pattern lead circuit 7.

The referenced external control device puts the gate signal in the enabled state relative to the training pattern detection circuit, with timing in which the data of the training pattern TP from magneto optical disc 22 is reproduced.

In other words, during the period in which the gate signal is enabled, the data of the training pattern area TP of magneto optical disc 22 is reproduced, and after the reproduced signal has been equalized by PR equalization circuit 23, it is produced as sample data by A/D converter 24, and is applied to training pattern detection circuit 5. Once training pattern detection circuit 5 commences operation through the enablement of the gate signal, then the sample data from A/D converter 24 is attained, and detection is accomplished as to whether or not it conforms with repeated patterns at the interim level, the high level, the interim level, and the low level is shown in Figure 11(b).

In other words, with training pattern detection circuit 5, when detection is accomplished of the training pattern, the four units of sample data in the four stage (four bit) shift register of training pattern detection circuit 5 is obtained, comparison is accomplished of the value of the four units, and the maximum value and the minimum value are obtained. Also, only when the relationship of the bit position between the maximum value and the minimum value is such that there is a two bit gap in the shift register is the pattern of the training pattern area TP considered to be ordinary, and it is judged that there are no medium defects, of the indicated signal obtained of the training pattern, and it is sent to pattern lead circuit 7.

Furthermore, when it is judged that the data of the training pattern area TP is not ordinary, then the training pattern detection circuit 5 inputs the next four bit sample data, and the bit position relationship is examined in the same manner for the maximum value and the minimum value of the input data, and a determination is made as to whether or not there is a medium defect of the training pattern area TP.

In this manner, by means of training pattern detection circuit 5, the training pattern sample data is obtained in four bit units, and detection is accomplished as to whether or not the pattern is correct, and if It is correct, then obtaining the data relative to pattern lead circuit 7 is indicated. Furthermore, by means of delay circuit 6, when the sample data of the training pattern is input, a four clock minute (four bit) delay is accomplished of the data, which is applied to pattern lead circuit 7. In other words, by means of delay circuit 6, during the period in which a determination is being made by training pattern detection circuit 5 as to whether or not the training pattern is normal, the pattern data is maintained.

In this manner, by means of pattern lead circuit 7, it is possible to obtain only good training pattern sample data, and to apply it to ideal value determination circuit 8.

By means of ideal value determination circuit 8, in the same manner as described earlier, determination is accomplished of the ideal amplitude values i2, i1, and i0 relating to the three values comprised of the maximum, interim, and minimum values from the obtained training pattern sample data.

As a determination method for the ideal amplitude value, by sorting into the three logic levels by means of the two threshold value levels chronologically from the head of the good sample data applied from pattern lead circuit 7 in this manner, with a method for making the initial sample data of the respective logic levels the ideal amplitude values, and sorting the obtained good sample data into three logic levels by means of the two threshold value levels chronologically from the head, in the same manner, then subsequently, this method provides for obtaining the average for the sample data of the M units belonging to each group, and making them the ideal amplitude values i2, i1, and i0.

Figure 16 shows the addition of training pattern detection circuit 5, delay circuit 6, and pattern lead circuit 7, and ideal value determination circuit 8 to the PRML system in which utilization is made of viterbi decoder 76 shown in Figure 7, a fourth embodiment of the present invention. In this instance, since the operation of each added circuit is the same as that of the PR system of Figure 15, the explanation of the same has been omitted. In this manner, through the addition of each of the described circuits to the PRML system, even within the PRML system, as with the PR system, even if there are medium errors in a part of the training pattern area TP, the ideal amplitude value can be accurately obtained, and with viterbi decoder 76, the reproduced user data can be accurately decoded, and data can be obtained in which there are no bit errors.

In this manner, the amplitude value of the individual sample data of the training pattern is compared with the before and after values, and if there is conformance between the characteristics of the pre-obtained training pattern and the compared results, then, since the ideal amplitude value can be determined on the basis of the sample data, then when medium defects occur in a part of the training pattern area TP, the sample data is not seen as the training pattern. Furthermore, it avoids the determination of the ideal amplitude value from the sample data of the medium defect area, and continuing thereafter, inappropriate large scale bit errors occurring in the inaccurately decoded reproduced data of the user data can be eliminated.

In addition, It is also possible to determine the ideal amplitude value as an average of multiple sample data within the training pattern, and deviations in the ideal amplitude values produced by aberrations of the sample data originating in the noise can be reduced by the averaging process described above.

Furthermore, with each of the above described embodiments an explanation has been provided with respect to a data reproduction system in which utilization has been made with either PR(1,1) formats. However, it is also possible to apply this to other PR formats.

In addition, the detection method of the training pattern in the training pattern detection circuit, and the calculation method for the ideal values in the ideal value determination circuit are such that various methods exist other than the methods which have been explained in the present embodiment.

## Claims

1. A reproduction device comprising:
reproduction means for reproducing data; and
a disc type recording medium (22) having a first recording area (DT) on which user data is recorded and
a second recording area (TP) on which a training pattern is recorded, said training pattern provided for calculating an ideal amplitude value which determines the logic of said user data, said reproduction means reproducing said training pattern in advance of said user data.

2. The reproduction device according to claim 1, wherein said second recording area (TP) is provided in the leading portion of said first recording area (DT) and within said first recording area (DT).

3. The reproduction device according to one of claims 1-2, wherein said second recording area (TP) is provided in the leading portion of said first recording area (DT), and wherein said second recording area is provided within said first recording area when the number of "0" bits in said user data recorded in said first area is not equal to the number of "1" bits in said user data recorded in said first area.

4. The reproduction device according to one of claims 1-3, wherein said reproduction means includes:
a PR equalization circuit (23) which equalizes the reproduction signal of said user data recorded in said first recording area (DT) and said training pattern recorded in said second recording area (TP) of said disc type recording medium (22) on the basis of a partial response format;
a clock generation circuit (25) which produces a clock signal from the output signal of said PR equalization circuit (23);
an A/D converter (24) which samples said output signal of said PR equalization circuit (23) on the basis of said clock signal, and produces sample data;
a decoding circuit (26, 76) which decodes said sample data of said user data based on said ideal amplitude value, and produces reproduction data; and
an ideal value determination circuit (8) which determines said ideal amplitude value from said sample data of said training pattern which is output from said A\D converter (24) and a control signal, and which is applied to said decoding circuit (26, 76).

5. The reproduction device according to claim 4 wherein said decoding circuit includes:
a bit by bit decoding circuit (26) which determines a threshold value level from said ideal amplitude value, and on the basis of said determined threshold value level determines what the level of the N ideal amplitude values (N comprising an integer equal to two or more) for said logic of said sample data of said A/D converter (24), and converts it to binary data on the basis of the determination results, thereby reproducing the user data recorded in said disc type recording medium (22); and
a training pattern read circuit (7) which obtains the training pattern sampling data which is sampled by means of the A/D converter after equalized by means of the PR equalization circuit (23).

6. The reproduction device according to claim 4 wherein said decoding circuit includes:
a viterbi decoding circuit (76) which decodes said sample data of said A/D converter (24) on the basis of a pre-established N (N comprising an integer of two or more) into binary data, thereby reproducing said user data recorded in said disc type recording medium (22); and
a training pattern read circuit (7) which obtains the sample data of the training pattern which is sampled by means of the A/D converter (24) after equalized by said PR equalization circuit (23).

7. The reproduction device according to one of claims 4-6, wherein said ideal value determination circuit (8) determines what the level is of an N value for a logic level of each of said sample data obtained from a training pattern read circuit (7), groups the sample data following each determined logic level, and calculates said ideal amplitude value corresponding to said logic level from an average value of said sample data included in each group.

8. A reproduction device according to one of claims 4-7 further comprising:
a detection circuit (5) which detects the accuracy of said training pattern sample data output from said A/D converter (24) at the time of outputting a control signal in the reproduction of said training pattern;
a delay circuit (6) which preserves said training pattern sample data during detection of the accuracy of said training pattern sample data by means of said detection circuit (5).

9. The reproduction device according to one of claims 4-8, wherein said ideal value determination circuit (8) determines said ideal amplitude value, averaging said input sample data.

10. A method of reproducing data using the device of one of claims 4-9, comprising the steps of:
providing a disc type recording medium having a first area for recording user data and a second area, said second area having a training pattern which accomplishes the calculation of an ideal amplitude value for determining the logic of a user pattern for said user data, reproduction of said training pattern being accomplished in advance of the reproduction of said user data;
equalizing the reproduction signal of said user data recorded in said first area and said training pattern data recorded in said second area of said disc type recording medium on the basis of a partial response format and producing an equalized output;
generating a clock signal from said equalized output;
sampling said equalized output on the basis of said clock signal and producing sample data;
decoding said sample data of said equalized output based on said ideal amplitude value and producing reproduction data; and
determining said ideal amplitude value from said sample data of said training pattern in the output of the control signal, and which is applied to said decoding circuit.
